# EUROPEAN PATENT APPLICATION

(11) **EP 0 524 627 A2**
(43) Date of publication of application: **27.01.1993**
(21) Application number: 92112601.7
(22) Date of filing: 23.07.1992
(51) Int. Cl.: H04N 5/782, H04N 9/79, G11B 5/008

(54) **Recording/reproducing apparatus**

(30) Priority: 24.07.1991 JP 184487/91; 28.02.1992 JP 42562/92
(71) Applicant: MATSUSHITA ELECTRIC INDUSTRIAL CO., LTD., Kadoma-shi, Osaka-fu, 571 (JP)
(72) Inventor: Shibaike, Narito, Hirakata City, 570 (JP); Matsumoto, Satoshi, Higashinada-ku, Kobe City, 658 (JP)
(74) Representative: Dr. Elisabeth Jung Dr. Jürgen Schirdewahn Dipl.-Ing. Claus Gernhardt

(57) **Abstract**

In a recording/reproducing apparatus, n×m pieces of rotary heads (21a,21b;22a,22b;23a,23b) are disposed in n planes of m pieces on a circumference of the tape guide drum (9), and the selected rotary head records a series of video signals by dividing into n sections. As a result, a physical format of the recording track for recording a series of the video signals can be freely set by the arrangement of the plural rotary heads (21a,21b;22a,22b;23a,23b). And, the tape guide drum (9), which has a great influence on size and weight of a tape loading mechanism, can be configured to have a minimum diameter. Therefore, the recording/reproducing apparatus can be configured to be formed in a small-sized as the same size as a tape cassette or a tape cassette case.

## Description

### FIELD OF THE INVENTION AND RELATED ART STATEMENT

### 1. FIELD OF THE INVENTION

The present invention relates to a recording/reproducing apparatus, such as a video cassette recorder (hereinafter abbreviated as VCR) or a digital audio tape recorder (DAT) for recording and reproducing video signals and/or audio signals on a tape cassette which is to be loaded into the recording/reproducing apparatus. The recording/reproducing apparatus records and/or reproduces such signals by drawing a part of tape out of the tape cassette so as to be herically wound around a tape guide drum having rotary heads and by moving the tape in a predetermined tape path.

### 2. DESCRIPTION OF THE RELATED ART

In recent years, many VCR have come into wide use as a recording/reproducing apparatus. In the VCR, especially portable VCR incorporated in a camera unit in one body, a user is intensively expecting that such portable VCR is configured to be formed in small-sized, light-weighted and have superior functions, such as high speed recording for reproducing a clear slow-motion picture. A stationary-type VCR is also expected to be configured small-sized and to have superior functions, such as recording or reproducing high definition television signals. Therefore, it is the very important factors to achieve these objects in order to spread such VCR as home-use recording/reproducing apparatus.

In such VCR, it is indispensable for recording and/or reproducing to automatically draw a part of tape out of a tape cassette and to wind the drawn-out tape herically around a tape guide drum, so that the tape can be disposed on a predetermined tape path defined by the tape guide drum and various loading posts and the like. Therefore, a basic plane view size of such VCR has been almost determined by a diameter of the tape guide drum, dimensions of receiving space for the various loading posts as a path-forming means, and dimensions of the tape cassette to be loaded.

Recently, in order to achieve a small-sized VCR, some portable VCR are designed to have a tape guide drum which is to be inserted into a front opening on the tape cassette when the tape draw-out of the tape cassette is wound around the tape guide drum.

And, some portable VCR are designed to slide a part of an outer case of the VCR into an inner space where the path-forming means has passed for winding around the tape guide drum, in order to achieve more small-sized VCR. Example of such a conventional VCR as a recording/reproducing apparatus is shown in the Japanese published unexamined patent application No. Sho 62-180551 (Tokkai Sho 62-180551) which was filed by the same assignee.

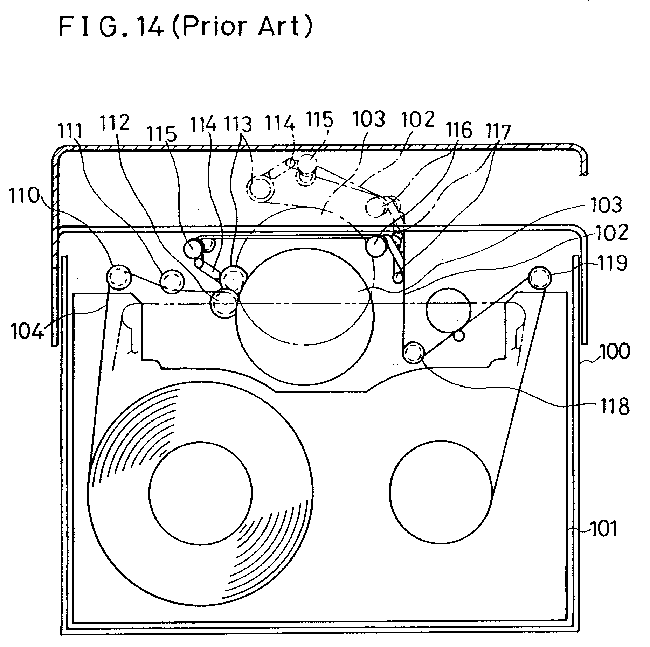

FIG.14 is a plan view showing main parts of the recording/reproducing apparatus which is disclosed in the publication (No. Sho 62-180551). In FIG.14, a tape cassette 101 is loaded in the recording/reproducing apparatus 100, and the tape 102 is disposed on a predetermined tape path defined by a tape guide drum 103 and various loading posts 110, 111, 112, 113, 114, 115, 116, 117, 118 and 119 and the like. When the tape 102 is disposed on the tape path, a part of the tape 102 drawn from the tape cassette 101 is herically wound around the tape guide drum 103. FIG.14 shows that the tape guide drum 103, the various loading posts 113, 114, 115, 116 and 117 and the wound tape 102, which are shown by the alternate long and short dash lines, are moving on a way of a cassette loading operation. And the tape guide drum 103, the various loading posts 110, 111, 112, 113, 114, 115, 116, 117, 118 and 119 and the tape 102, which are shown by the solid lines, are in a finish of the cassette loading operation. As shown in FIG.14, the tape guide drum 103 needs a large space for arrangement in the conventional recording/reproducing apparatus 100.

And further, in order to achieve clear slow-motion picture operation, as one of the superior function, the recording/reproducing system records or reproduces the recording information which is about three times of general recording information in the general conventional apparatus. Such recording/reproducing system for clear slow-motion picture operation has been in practical use in a video cassette recorder (VCR) for a broadcasting field. In the recording/reproducing apparatus for home-use, however, the recording/reproducing system for clear slow-motion picture operation has not been developed because of a complicated mechanism.

Recently, in order to record or reproduce a high definition television (HDTV) signals, a recording/reproducing apparatus is attempting to record several times picture information of the general standard television signals (hereinafter abbreviated as standard TV signals) of the National Television System Committee (NTSC) or the Phase Alternation by line (PAL). The recording/reproducing apparatus for HDTV can not be configured to be formed in a small-sized and to have a simple mechanism owing to increased picture information and the like. Accordingly, though the recording/reproducing apparatus for HDTV has been turned to practical use in a video cassette recorder (VCR) for broadcasting field, the video cassette recorder (VCR) for HDTV has never been widely used for home-use recording/reproducing apparatus.

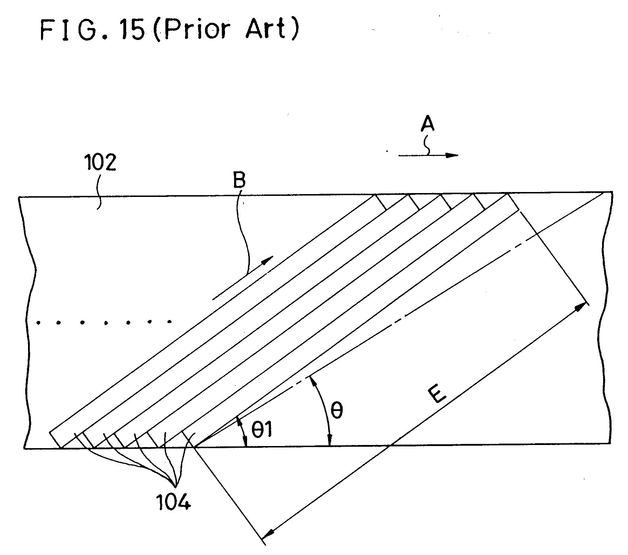

FIG.15 shows recording patterns on the tape 102 where video signal is recorded by the above-mentioned conventional recording/reproducing apparatus shown in FIG.14.

The conventional recording/reproducing apparatus has a tape guide drum 103 which generally provides two or four rotary heads disposed on a virtual plane making a right angle to an axis of the rotation of the tape guide drum 103. In case of a system with two rotary heads provided to the tape guide drum 103, the rotary heads are installed at 180 degrees apart from each other on the virtual plane on a circumference of the tape guide drum 103. In case of a system of four rotary heads, the rotary heads are installed at 90 degrees apart from each other. Each of these rotary heads records one field of standard TV signals to one continuous recording track 104 on the tape 102, by rotating the tape guide drum 103 at high speed during the tape traveling. These rotary heads alternately form diagonal recording tracks 104 adjacent to each other by switching the rotary heads.

In consequence, the diagonal recording tracks 104, which are formed on the tape 102 side by side abreast, are configured to have an inclined angle ϑ ₁ as large as the tape guide angle ϑ of the tape guide drum 103 because the tape 102 is traveling in a direction shown with an arrow A in FIG.15. A direction, which is shown with an arrow B in FIG.15, shows a head scanning direction of the rotary heads.

In case of two rotary heads provided to the tape guide drum 103, the tape guide drum 103 is rotated at a half frequency of the field frequency of the standard TV signals, and the tape 102 is wound at a wrap angle of 180 degrees around the tape guide drum 103. Therefore, a length of the recording track 104, that is a length E of the recording track for video signals of one field, is almost half length of a circumference of the tape guide drum 103.

In case of four rotary heads provided to the tape guide drum 103, a diameter of the tape guide drum 103 can be selected at 2/3 of the diameter of the tape guide drum 103 having two rotary heads. In this four rotary heads case, however, a wrap angle of the tape 102 around the tape guide drum 103 must be selected at 3/2 times (i.e. 270 degrees) of the wrap angle in case of the two rotary heads.

In the above-mentioned conventional recording/reproducing apparatus, when the tape 102 drawn from the loaded tape cassette 101 is herically wound around the tape guide drum 103 to be disposed on a predetermined tape path, the loaded tape cassette 101 and the tape guide drum 103 must be moved close to each other, and the outside casing of the recording/reproducing apparatus must be slidingly shrink. Therefore, the conventional recording/reproducing apparatus is disadvantageous in a complicated mechanism for loading operation of the tape cassette 101 and for sliding operation of the outer case. As a result, it has been so difficult to form a small recording/reproducing apparatus which has the same size as a tape cassette or a tape cassette case.

In the conventional recording/reproducing apparatus, the minimum length E of the recording track 104 for recording a video signal of one field is selected by the physical recording wave length which is decided by a recording frequency and a relative velocity between the tape 104 and the rotary heads. As a result, a minimum diameter of the tape guide drum 103 is inevitably decided by the above-mentioned minimum length E of the recording track 104. Since a quantity of the rotary heads and a wrap angle of the tape 102 can not be selected at more increasing quantity and larger angle than the conventional recording/reproducing apparatus owing to the limited mounting space for the rotary heads and the restriction of the tape-traveling mechanism, the diameter of the tape guide drum 103 can not be designed to have sufficiently small diameter. Therefore, the conventional recording/reproducing apparatus can not be configured to such a small size as that of the compact tape cassette or a casing of a compact tape cassette.

And further, in order to provide a VCR having superior functions that high definition television signals can be recorded/reproduced and/or a clear slow-motion picture operation can be achieved, a tape guide drum must be configured to a large size and must be rotated at super high speed for recording increased information of the high definition television signals.

### OBJECT AND SUMMARY OF THE INVENTION

It is an object of the present invention to provide a recording/reproducing apparatus which is configured to be formed in a small-sized and to have the superior functions.

In order to achieve the above-mentioned object, the recording/reproducing apparatus of the present invention comprises:
a tape guide drum for forming a tape path for recording or reproducing signals and
m pieces of rotary heads disposed in n planes which are parallel with each other and has right angles to a rotation axis of the tape guide drum,
n pieces of the rotary head each selected from the m pieces of rotary heads in each plane writing in a manner to divide one continuous signal into n sections by the n pieces of rotary heads selected from each plane.

While the novel features of the invention are set forth particularly in the appended claims, the invention, both as to organization and content, will be better understood and appreciated, along with other objects and features thereof, from the following detailed description taken in conjunction with the drawings.

### BRIEF DESCRIPTION OF THE DRAWINGS

FIG.1 is a plan view showing main parts of a tape loading mechanism of a recording/reproducing apparatus of a first embodiment in accordance with the present invention.

FIG.2 is a perspective view showing an arrangement of rotary heads in a tape guide drum of the recording/reproducing apparatus of FIG.1.

FIG.3 is a side view showing a relative relation between a tape and the tape guide drum of FIG.1.

FIG.4 is a diagram showing a recording system of the recording/reproducing apparatus of FIG.1.

FIG.5 shows recording patterns which are scanned by the recording/reproducing apparatus of FIG.1.

FIG.6 is a plan side perspective view showing a tape cassette to be loaded in the recording/reproducing apparatus of the present invention.

FIG.7 is a rear side perspective view showing the tape cassette of FIG.6.

FIG.8 is a cross-sectional side view showing the tape cassette of FIG.6.

FIG.9 is a block diagram showing a recording/reproducing apparatus of a second embodiment in accordance with the present invention.

FIG.10 is a diagram showing a recording system of the recording/reproducing apparatus of FIG.9.

FIG.11 is a block diagram showing a recording/reproducing apparatus of a third embodiment in accordance with the present invention.

FIG.12 is a diagram showing a recording system of the recording/reproducing apparatus of FIG.11.

FIG.13 is a plan view showing main parts of a tape loading mechanism of a recording/reproducing apparatus of a fourth embodiment in accordance with the present invention.

FIG.14 is the plan view showing main parts of the conventional recording/reproducing apparatus.

FIG.15 shows the recording patterns on the tape where video signals is recorded by the conventional recording/reproducing apparatus.

It will be recognized that some or all of the Figures are schematic representations for purposes of illustration and do not necessarily depict the actual relative sizes or locations of the elements shown.

### DESCRIPTION OF THE PREFERRED EMBODIMENTS

### [ First embodiment ]

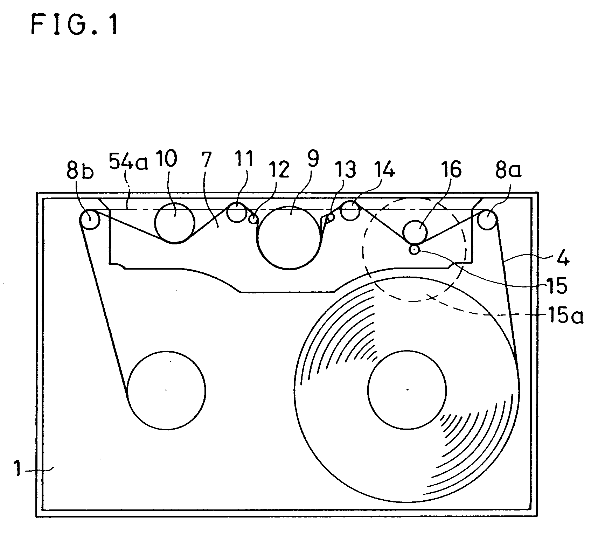

Hereafter, a first embodiment of a recording/reproducing apparatus of the present invention is described referring to the accompanying drawings of FIGs. 1 to 8.

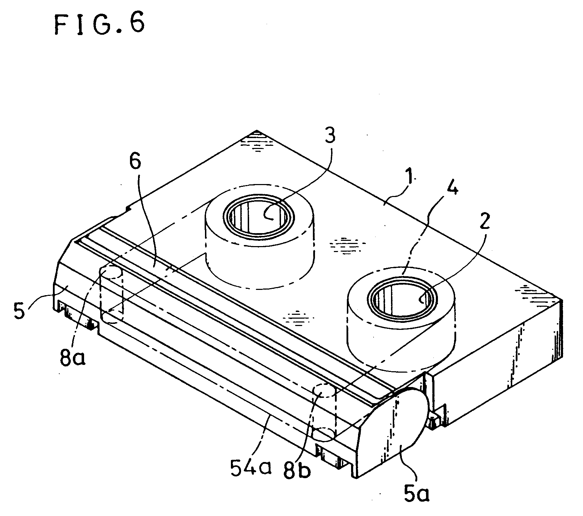

In the first place, a tape cassette, which is to be loaded to the recording/reproducing apparatus of the present invention, is described referring to FIGs. 6 to 8.

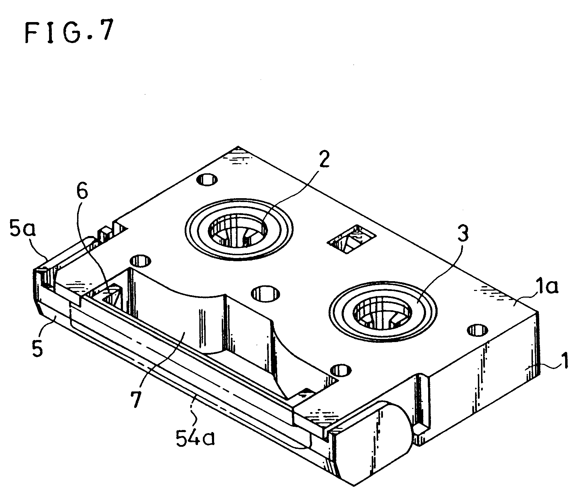

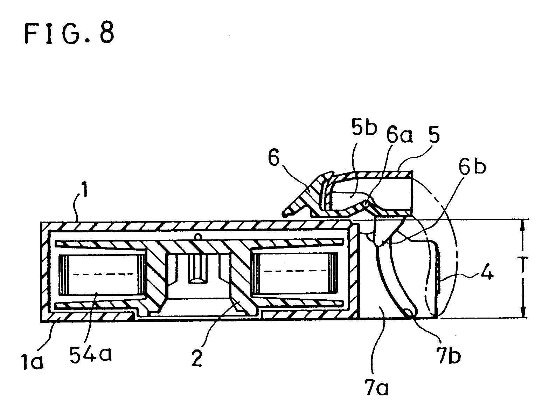

FIG.6 is a plan side perspective view showing the tape cassette 1 which is to be loaded to the recording/reproducing apparatus of the present invention. FIG.7 is a rear side perspective view showing the tape cassette 1 of FIG.6. FIG.8 is a cross-sectional side view showing the tape cassette 1 of FIG.6.

In the FIG.6, a tape 4, which is wound around a supply reel 2 as well as a take-up reel 3 in the tape cassette 1, is stretched between through a pair of rotatable cassette posts 8a and 8b in front of the tape cassette 1. The stretched tape 54a and the cassette posts 8a and 8b are shown by the alternate long and short dash lines in FIG.6. The part of tape 4 disposed in the front part of the tape cassette 1 is disposed between a lid 5 and a back lid 6, which is situated near the back face of the stretched tape 54a between the cassette posts 8a and 8b, when the tape cassette 1 is not loaded in the recording/reproducing apparatus.

As shown in FIG.7, an opening 7 of the tape cassette 1 is formed on a front side of the rear face 1a. The opening 7 of the tape cassette 1 is arranged in a manner to provide therein various loading posts for drawing the stretched tape 54a from the tape cassette 1 to the inner part of the recording/reproducing apparatus when the tape cassette 1 is loaded to the recording/reproducing apparatus. When the tape cassette 1 is loaded into the recording/reproducing apparatus, a known lid open mechanism (not shown) for opening the lid 5 and the back lid 6 of the tape cassette 1 contacts with a side face 5a of the lid 5, so as to open the lid 5 and the back lid 6 as shown in FIG.8.

In a non-loaded state where the tape cassette 1 is taken out from the recording/reproducing apparatus, the back lid 6 is arranged at rear side of the lid 5 with the stretched tape 54a in between. An end portion 6a of the back lid 6 is rotatably supported by a support plate 5b (FIG.8) of the lid 5. A guide pin 6b of the back lid 6 is engaged with an arc-shaped guide groove 7b which are formed on both side faces 7a of the tape cassette 1. And the guide pin 6b is guided to slide rotatably on the arc-shaped guide grooves 7b. As a result, when the tape cassette 1 is loaded to the recording/reproducing apparatus, the lid 5 and the back lid 6 are rotated by the lid open mechanism along a predetermined locus as shown by the alternate long and short dash line in FIG.8 without contact to the tape 4 stretched in front of the tape cassette 1.

When the lid 5 and the back lid 6 are entirely opened by the lid open mechanism, the lid 5 and the back lid 6 are rotated to expose the tape 4 stretched between the cassette posts 8a and 8b. That is the lid 5 and the back lid 6 are moved for distances longer than the height T of the tape cassette 1. Therefore, a below-mentioned tape guide drum and various loading posts in the recording/reproducing apparatus can be inserted into the opening 7 of the tape cassette 1 when the tape cassette 1 is loaded to the recording/reproducing apparatus.

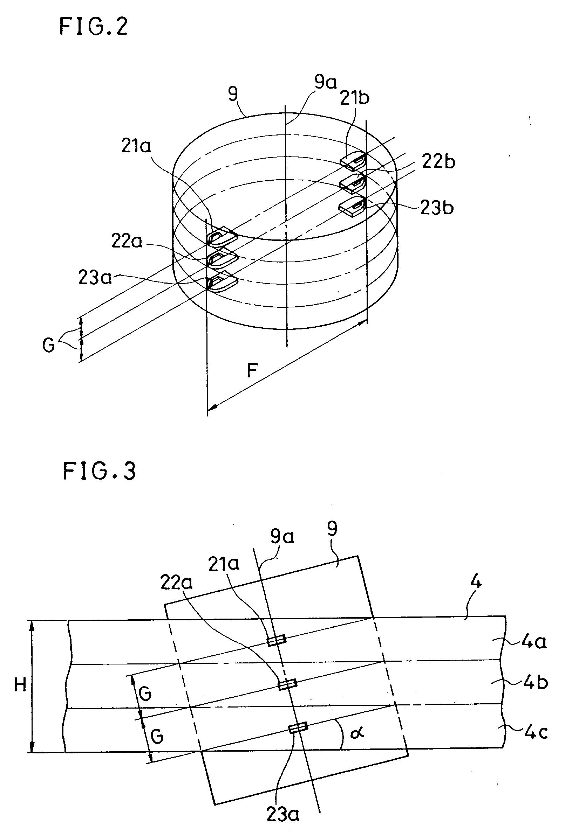

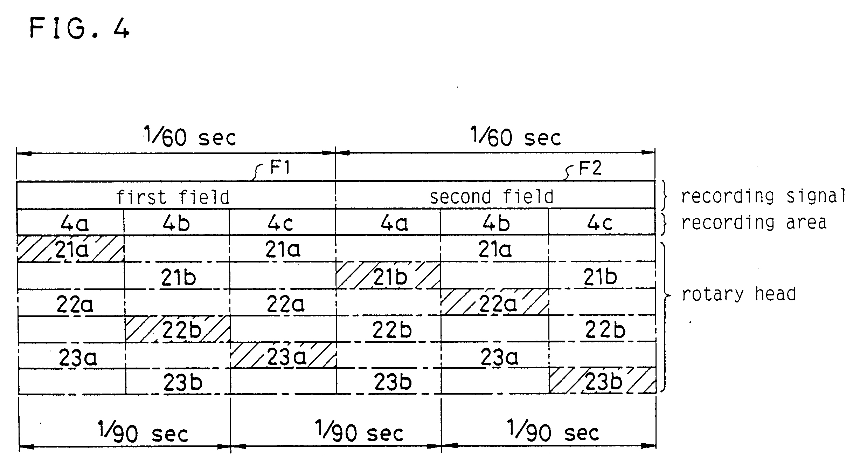

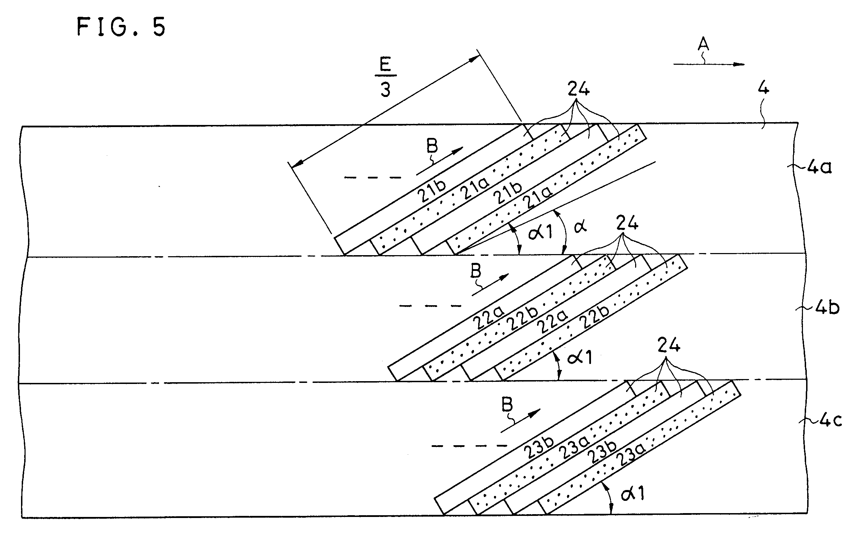

A basic construction of the first embodiment of the recording/reproducing apparatus in accordance with the present invention is described hereinunder with reference to FIGs. 1 to 5. FIG.1 is a plan view showing main parts of a tape loading mechanism of the recording/reproducing apparatus of the first embodiment. FIG.2 is a perspective schematic view showing an arrangement of rotary heads in the tape guide drum of the recording/reproducing apparatus of FIG.1. FIG.3 is a side view showing a positional relation between the tape and the tape guide drum of FIG.1. FIG.4 is a diagram showing a recording system of the recording/reproducing apparatus of FIG.1. FIG.5 shows recording patterns which are scanned by the recording/reproducing apparatus of FIG.1.

In FIG.1, the tape 4 of the tape cassette 1, which has been described in the foregoing description with reference to FIGs. 6 to 8, is stretched between through a pair of cassette posts 8a and 8b in front of the tape cassette 1. The opening 7, which is formed on a front side of the tape cassette 1, is arranged in a manner to provide therein the tape guide drum 9 having plural rotary heads, various loading posts 10, 11, 12, 13 and 14 for forming a tape path, a capstan 15 and a pitch roller 16, when the tape cassette 1 is loaded into the recording/reproducing apparatus of the first embodiment.

When the tape cassette 1 is just loaded into the recording/reproducing apparatus, some loading posts 11, 12, 13 and 14 and the capstan 15 are disposed into the opening 7 of the tape cassette 1. At the same time, the tape guide drum 9, the loading post 10 and the pinch roller 16 are disposed outside the opening 7 to face against the stretched tape 54a. A capstan motor 15a, which is configured integral with the capstan 15, is provided under a frame (not shown) supporting the capstan 15. The capstan 15 is rotated by the capstan motor 15a in both directions, that is in a clockwise and a counterclockwise in FIG.1.

A tape path for the recording or reproducing is established in the recording/reproducing apparatus of the first embodiment by the tape guide drum 9, the loading posts 10, 11, 12, 13 and 14 and the pinch roller 16 which are moved toward predetermined positions to close to the tape 4. When the tape path is established in the recording/reproducing apparatus, the tape 4 is wound at a wrap angle of about 190 degrees around the tape guide drum 9, and the wound tape 4 is slanted at a predetermined inclination for recording or reproducing. Since a driving mechanism for sliding the tape guide drum 9, the loading posts 10, 11, 12, 13 and 14 and the pinch roller 16 can be constructed by a conventional sliding lever assembly (not shown), which has been known and widely used, an explanation for the driving mechanism is omitted from the following description.

As shown in FIG.1, the tape guide drum 9 of the first embodiment is configured to be received in a possible minimum space of the opening 7. As a result, the whole necessary path-forming members for forming the tape path, for example, the tape guide drum 9, the loading posts 10, 11, 12, 13 and 14, the capstan 15 and the pinch roller 16, are received in the opening 7 of the tape cassette 1 when the tape path is established by the path-forming unit. At the same time, the driving mechanism, such as the capstan motor 15a is also arranged under the loaded tape cassette 1. Therefore, the whole path-forming members and driving mechanism are arranged in the plan view size of the tape cassette 1 as shown in FIG.1; and so the recording/reproducing apparatus of the first embodiment is advantageous in the reduction of size.

Hereafter, a construction of rotary heads on the tape guide drum 9 and a relative position between the tape guide drum 9 and the tape 4 are described referring to the accompanying drawings FIGs. 2 and 3.

In FIG.2, a diameter F of the tape guide drum 9 of the first embodiment is selected at 1/3 of the diameter of the conventional two head type tape guide drum. In case that standard TV signals are recorded with the format of 8 mm VCR, (though the recording pattern of this case is somewhat different from the conventional format), the diameter F of the tape guide drum 9 can be selected so small as 13.3 mm. In this case, the tape 4 is wound around the tape guide drum 9 by an angle of 190 degrees. The video signals are recorded on the wound tape 4 in a wrap angle of 180 degrees.

As shown in FIG.2, six rotary heads 21a, 21b, 22a, 22b, 23a and 23b are provided disposed in three parallel planes each making right angles to the rotation axis 9a of the tape guide drum 9. A pair of the first rotary head 21a and the second rotary head 21b are disposed on the peripheral outer surface at the uppermost virtual horizontal plane of the tape guide drum 9, being spaced from each other by 180 degrees angular interval with respect to the axis 9a of the rotation of the tape guide drum 9. And a pair of the third rotary head 22a and fourth rotary head 22b, and a pair of the fifth rotary head 23a and the sixth rotary head 23b are disposed on the peripheral outer surface of the tape guide drum 9 at the second and the third virtual horizontal planes with the same 180 degrees angular interval as the first rotary head 21a and the second rotary head 21b. The first rotary head 21a, the third rotary head 22a and the fifth rotary head 23a are disposed on a straight line which is parallel to the axis 9a of rotation of the tape guide drum 9. And, the first rotary head 21a and the third rotary head 22a are disposed to have a predetermined gap G therebetween. The third rotary head 22a and the fifth rotary head 23a are also arranged to have the predetermined gap G therebetween, that is the same interval as the interval between the first rotary head 21a and the second rotary head 22a. The second rotary head 21b and the fourth rotary head 22b, and the fourth rotary head 22b and the sixth rotary head 23b are also disposed so as to have the same gap G as the intervals between the first rotary head 21a and the third rotary head 22a, and the third rotary head 22a and the fifth rotary head 23a. As mentioned above, in the first embodiment, the rotary heads are arranged in three pairs respectively on three planes each making right angles to the axis 9a of the rotation of the tape guide drum 9.

The above-mentioned predetermined gap G is selected to be about 1/3 of the width H of the tape 4 as shown in FIG.3. The three pairs of the rotary heads 21a and 21b, 22a and 22b, 23a and 23b can scan on three recording areas 4a, 4b and 4c, which are arranged to divide a recording area of the tape 4 into three band shaped sections having equal width. An angle α shown in FIG.3 is a relative angle between the tape 4 and the tape guide drum 9. This angle α also shows a tape guide angle of a tape guide which is provided to a stationary part (not shown) of the tape guide drum 9.

In the above-mentioned recording/reproducing apparatus of the first embodiment, a recording system and a recording pattern are described referring to the accompanying drawings of FIGs. 4 and 5.

FIG.4 diagrammatically illustrates a recording system for recording video signals of two fields. The tape guide drum 9 is selected to be rotated at 3/2 times field frequency of the standard TV signal. In case that standard TV signals of National Television System Committee (NTSC) are recorded, the tape guide drum 9 is rotated at 90 Hz of frequency. Therefore, the tape guide drum 9 is rotated 3/2 rotation (i.e. 540° ) for every field.

In FIG.4, when the first rotary head 21a is recording the first 1/3 part of the first field F1 to the upper recording area 4a shown in FIG.3, the third rotary head 22a and the fifth rotary head 23a do not record though these rotary heads 22a and 23a contact with the tape 4 at the same time. Then, the next 1/3 part of the first field F1 is recorded in the middle recording area 4b by the fourth rotary head 22b. The final 1/3 part of the first field F1 is recorded in a lower recording area 4c by the fifth rotary head 23a. Thereafter, the second field F2 is recorded in the upper recording area 4a, the middle recording area 4b and the lower recording area 4c by switching from the second rotary head 21b, to the third rotary head 22a and to the sixth rotary head 23b, one after another, in the same manner as the recording of the first field F1 as shown in FIG.4. Thereafter, the above-mentioned recording system is repeated for recording the video signals of the tape 4. In FIG.4, blocks which are hatched by oblique lines show the rotary heads which record the video signals on the tape 4, while blocks which are not hatched but has the number of the heads shown in FIG.2 show the rotary heads which do not record the video signals.

In a reproducing system of the video signals recorded on the tape 4, it is possible to reproduce the video signals in the same manner as the above-mentioned recording system. And, it is possible to reproduce the video signal recorded on the tape 4 by other recording/reproducing apparatus that each rotary head is precisely disposed at predetermined position to the tape guide drum 9.

FIG.5 diagrammatically illustrates recording pattern which is formed on the tape 4 by the recording system shown in FIG.4. The numerals shown in the recording tracks 24 designate the rotary heads which scan the recording track 24. Each recording track 24 is configured to have an inclination α ₁ which is slightly larger than the tape guide angle α (shown in FIG.3) of the tape guide drum 9 because the tape 4 is traveling in a direction shown by an arrow A in FIG.5, and the rotary heads are scanning in directions shown by arrows B in FIG.5. As shown in FIG.5, length of the recording track 24 is decided at 1/3 length of the conventional recording track, namely almost 1/3 E. E is length of the conventional recording track scanned by one-rotary head.

In the recording/reproducing apparatus of the first embodiment, the traveling speed of the tape 4 is selected so that recording tracks in each recording area are without any gap therebetween adjacent. However, in order to decrease a crosstalk caused by interference between adjacent tracks, it is preferable that the azimuth of the rotary head for forming adjacent recording track is selected to have different angle. In other words, the first rotary head 21a and the second rotary head 21b are designed to have different azimuth. And, the third rotary head 22a and the fourth rotary head 22b, as well as the fifth rotary head 23a and the sixth rotary head 23b are designed to have different azimuth with each other.

And further, in the first embodiment, the first rotary head 21a, the fourth rotary head 22b and the fifth rotary head 23a are selected to have the same azimuth as shown with dotted areas in FIG.5. The second rotary head 21b, the third rotary head 22a and the sixth rotary head 23b are selected to have the same azimuth. As a result, the video signals of the same field are recorded by the rotary heads having the same azimuth. Therefore, when video signal of same field is reproduced by the conventional recording/reproducing apparatus, the video signals of the divided fields can be converted to one field by using a known memory circuit, a known delay device and the like. Furthermore, in order to produce one continuous recording track from the divided tracks of the same field, the timing for recording each divided fields is changed by using the above-mentioned memory circuit and delay device, and the position of the track on each recording areas is moved to the direction of the tape traveling. Therefore, the video signals recorded by the recording/reproducing apparatus of the first embodiment can be easily scanned and reproduced by the conventional recording/reproducing apparatus. Therefore, the recording/reproducing apparatus of the first embodiment uses effectively the same recording area of the tape 4 as the conventional recording/reproducing apparatus that rotary heads are arranged on one plane at right angles to an axis of rotation of a tape guide drum.

In case that the video signal is recorded and reproduced by only the recording/reproducing apparatus of the first embodiment, of course, the recording area of the tape 4 is effectively used by the recording/reproducing apparatus of the first embodiment. And further, in case that digital recording signals are used in the recording/reproducing apparatus, this recording/reproducing apparatus does not produce the deteriorated video signals owing to the scattering (inequality) of characteristic of the rotary heads and inaccurate arrangement of the rotary heads. Therefore, the recording/reproducing apparatus is more advantageous when using the digital signals as recording signals.

According to the recording/reproducing apparatus of the first embodiment in accordance with the present invention, the video signal of one field are recorded by the combination of three rotary heads 21a, 22b and 23a or the other combination of the three rotary heads 21b, 22a and 23b. Since the combination of the three rotary heads 21a, 22b and 23a or said other combination of the three rotary heads 21b, 22a and 23b divides the video signals of one field into three recording tracks 24, 24 and 24, a length of the recording track 24 can be selected at 1/3 length of the conventional recording track which constructs one continuous field. And, the diameter of the tape guide drum 9 can be selected at 1/3 length of the diameter of the conventional tape guide drum. And further, the tape path for recording or reproducing can easily be established by using the small tape guide drum 9. As a result, the recording/reproducing apparatus of the first embodiment of the present invention can be configured in a small-size which is almost the same size as a tape cassette.

### [ Second embodiment ]

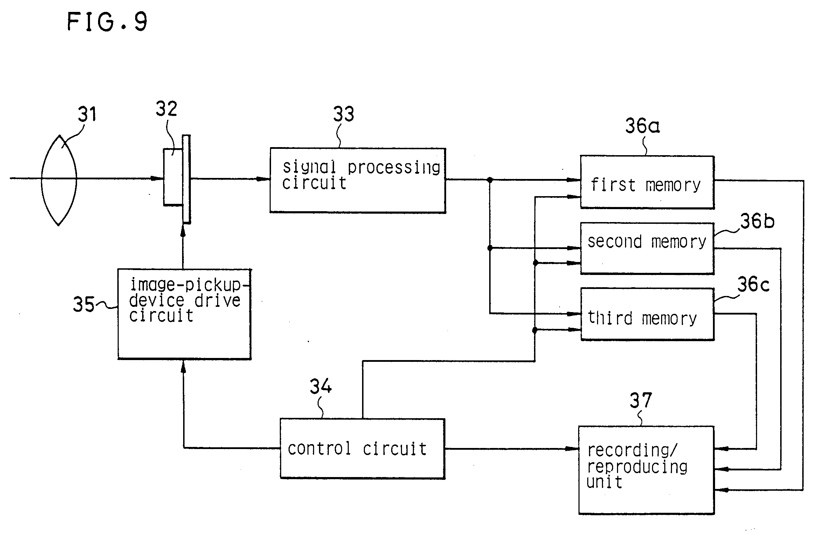

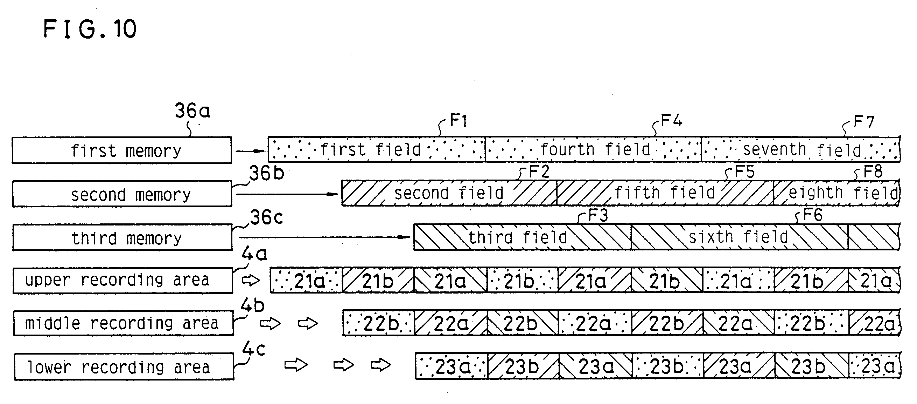

Hereafter, a second embodiment of a recording/reproducing apparatus in accordance with the present invention is described referring to the accompanying drawings of FIGs. 9 and 10. The recording/reproducing apparatus of the second embodiment is a special portable VCR incorporated in a camera unit in one body, especially a VCR having the below-mentioned excellent functions. Corresponding parts and components to the first embodiment are shown by the same numerals and marks, and the description thereon made in the first embodiment similarly apply. Differences and features of this second embodiment from the first embodiment are as follows.

FIG.9 shows a block diagram of the VCR incorporated in a camera unit in one body. In the VCR of the second embodiment, an image of an object is formed through a lens 31 on an image pickup device 32, such as a CCD (charge coupled device). And the image of the object obtained on the image pickup device 32 is converted to video signals by a signal processing circuit 33. The image pickup device 32 is operated to scan at the frequency as three times high as the scanning frequency of the standard TV signals by an image-pickup-device drive circuit 35 which is controlled by a control circuit 34. In other words, a video signals of three fields are derived from the CCD of the second embodiment in the same interval as the time interval for recording one field in the standard TV system.

The output video signal, which has scanning frequency as three times high as the scanning frequency of the standard TV system apparatus, are time-sequentially stored in a first memory 36a, a second memory 36b and a third memory 36c in that order. And, the stored video signal of the field is time-extended to three times length with respect to time in the memory system. Therefore, picture information as three times large as that of the standard TV signals is time-sequentially derived from the first memory 36a, the second memory 36b and the third memory 36c to a recording/reproducing unit 37, in that order and with respective time lags of 1/3 field scanning period therebetween as shown in FIG.10. FIG.10 diagrammatically illustrates a recording system of the recording/reproducing apparatus of the second embodiment. The video signal of each field is recorded on the tape 4 by the recording/reproducing unit 37 as follows:

In the following, the recording system of the recording/reproducing apparatus of the second embodiment is described with reference to FIG.10. The recording/reproducing apparatus of the second embodiment comprises the plural rotary heads 21a, 21b, 22a, 22b, 23a and 23b, which are arranged by the same construction as the aforementioned first embodiment shown in FIG.2. And, the recording/reproducing apparatus of the second embodiment is constructed to record the video signals to the three divided recording areas 4a, 4b and 4c of the tape 4 as the same manner as the first embodiment shown in FIG.3.

As mentioned above, the first memory 36a, the second memory 36b and the third memory 36c time-sequentially produce three video signals corresponding to three fields, respectively having time lags of 1/3 field scanning period therebetween. The three time-sequential video signals have parallelly (simultaneously) existing parts. Therefore it is necessary to record the video signals of three fields by the recording/reproducing unit 37 at the same time. This simultaneous recordings of the three fields are made by driving the tape 4 at the three times running speed of the first embodiment. In summary, the tape 4 of the recording/reproducing apparatus of the second embodiment is driven at three times speed of the first embodiment, while the tape guide drum 9 is rotated at the same revolution speed as the first embodiment.

As shown in FIG.10, the video signal of the first field F1, which is derived from the first memory 36a shown by dotted portion in FIG.10, is time-sequentially recorded on the tape 4 by the same operation as the aforementioned first embodiment. That is, the first rotary head 21a records the first 1/3 part of the first field F1 in the upper recording area 4a, the next 1/3 part of the first field F1 is recorded to the middle recording area 4b by the fourth rotary head 22b, and the final 1/3 part of the first field F1 is recorded to the lower recording area 4c by the fifth rotary head 23a in order.

Next a case of the recording operation for the second field F2, which is derived from the second memory 36b shown by rightward rising hatching, is considered. When the first rotary head 21a finishes to record the first 1/3 part of the first field F1 to the upper recording area 4a, the second rotary head 21b which has not been used in the first field F1 recording operation starts to record the first 1/3 part of the second field F2 to the upper recording area 4a as shown in FIG.10. In other words, when the fourth rotary head 22b are recording the next 1/3 part of the first field F1 to the middle recording area 4b, the second rotary head 21b is recording the first 1/3 part of the second field F2 to the upper recording area 4a. In this recording operation, since the tape 4 is traveling at three times speed of that of the first embodiment, the recording patterns scanned by respective rotary heads 21a, 21b, 22a, 22b, 23a and 23b are formed on the tape 4 without overlapping thereamong, and the information is recorded at three times information quantity of the first embodiment per time.

And further, when the final 1/3 part of the first field F1 is recorded by the fifth rotary head 23a to the lower recording area 4c, the third rotary head 22a records the next 1/3 part of the second field F2 to the middle recording area 4b. At the same time, the first rotary head 21a records the first 1/3 part of the third field F3 shown by rightward rising hatching. As shown in FIG.10, thereafter, six rotary heads 21a, 21b, 22a, 22b, 23a and 23b record the video signals to three recording areas 4a, 4b and 4c by selecting these rotary heads 21a, 21b, 22a, 22b, 23a and 23b in response to the video signals. Consequently, the video signals of three fields, which are derived from the first memory 36a, the second memory 36b and the third memory 36c, can be recorded to the tape 4 at the same time.

By the above-mentioned recording operation of the second embodiment, the recording patterns same as those formed in the aforementioned recording patterns shown in FIG.5 of the first embodiment is formed except the inclination of the recorded tracks. The difference of the recording patterns of the second embodiment in only the inclination from the first embodiment is caused by the different traveling speed of the tape 4.

In the recording/reproducing apparatus of the second embodiment, the first 1/3 part of each field is recorded to the upper recording area 4a, the next 1/3 part of each field is recorded to the middle recording area 4b, and the final 1/3 part of each field is recorded to the lower recording area 4c. Accordingly, the azimuth of each rotary head 21a, 21b, 22a, 22b, 23a and 23b and the arrangements of the recording tracks 24 in the second embodiment can be configured in the same characteristics as the first embodiment in order to decrease a crosstalk caused by interference between adjacent tracks.

In case of reproducing the video signals in the second embodiment, when the tape 4 is traveling at the same speed as the first embodiment, an extremely clear slow-motion picture can be reproduced by the second embodiment because the tape 4 has three times picture information of the first embodiment. In other words, since the tape guide drum 9 of the second embodiment can be selected to be rotated at the same revolution speed as the normal reproducing operation in the recording/reproducing apparatus of the second embodiment, there is no need to provide a large and complex mechanism for changing revolution speed of the tape guide drum 9. According to the second embodiment, it is possible to precisely analyze sport action or physical development by using a small portable VCR incorporated integrally in a camera unit.

In case wherein the video signals recorded by the second embodiment are reproduced by a slow-motion picture mode, that is, the tape 4 is traveling at the same speed as the first embodiment, it is sufficient only to adjust the inclination of the recording track 24 and the relative positions of the recording tracks 24, so as to correspond to difference of traveling speed between the recording operation and the reproducing operation. The adjustment of the inclination and the relative position are easily controlled by the known control system comprising a piezoelectric device and the like for controlling the arrangements of each rotary head.

According to the above-mentioned recording/reproducing apparatus of the second embodiment, the video signals of the three fields are produced by the image pickup device which is scanned at three times scanning frequency of that of the conventional apparatus, and which are derived from the first memory 36a, the second memory 36b and the third memory 36c to the recording/reproducing unit 37. And, the video signal can be recorded being divided into three recording tracks at the same time. Therefore, the recording/reproducing apparatus of the second embodiment has the same functions as the first embodiment, and further has a special function that a clear slow-motion picture can be reproduced (played) by using the tape 4 with recording of picture information as three times much as the general reproducing (playing) operation. Accordingly, even when the recording/reproducing apparatus of the second embodiment is configured in a small-sized tape cassette, it has a special reproducing function, that is a slow-motion picture can be clearly reproduced.

### [ Third embodiment ]

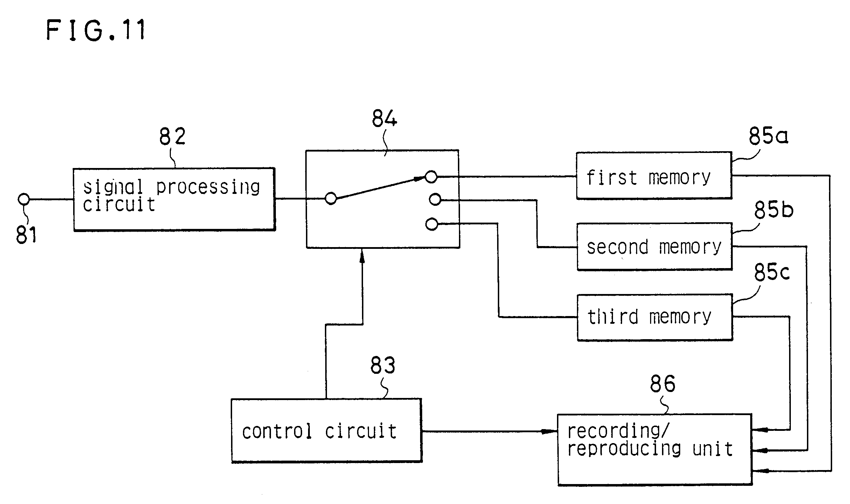

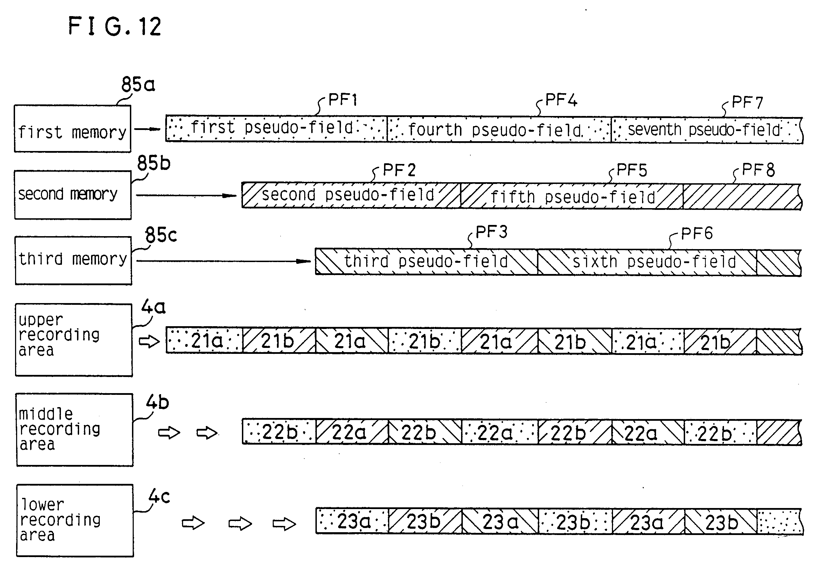

Hereafter, a third embodiment of a recording/reproducing apparatus in accordance with the present invention is described referring to the accompanying drawings of FIGs. 11 and 12. Corresponding parts and components to the first embodiment are shown by the same numerals and marks, and the description thereon made in the first embodiment similarly apply. Differences and features of this third embodiment from the first embodiment are as follows. The recording/reproducing apparatus of the third embodiment has a special function, is that high definition television signal can be recorded or reproduced. The recording/reproducing apparatus of the third embodiment comprises a recording/reproducing unit 86 which is constructed by substantially the same mechanism as the recording/reproducing unit 37 of the second embodiment. In the third embodiment, the rotary heads of the tape guide drum and the divided recording areas are configured to have the aforementioned arrangement of the first embodiment shown in FIGs. 2 and 3.

FIG.11 shows the block diagram of the recording/reproducing apparatus of the third embodiment. FIG.12 diagrammatically illustrates a recording operation of the third embodiment. Next, a recording system of the high definition television signals is described with reference to FIGs. 11 and 12.

Each field of the high definition television signal (hereinafter abbreviated as HDTV signal), which are received from an input terminal 81, is divided into each 1/3 field by a signal processing circuit 82. Respective divided fields, namely 1/3 fields are time-sequentially stored in a first memory 85a, a second memory 85b and a third memory 85c in that order by changing over a switch 84, which is controlled by a control circuit 83. In the first memory 85a, the second memory 85b and the third memory 85c, each stored 1/3 field is extended to three times in length with respect to time.

In other words, the recording/reproducing apparatus of the third embodiment extends time-sequentially one field of the HDTV signal to three times length, and divides the extended field into three pseudo-field signals. For example, the received video signal of 60 Hz is converted to be divided to the video signal of 180 Hz by the recording/reproducing apparatus of the third embodiment, and the divided video signal is converted to the extended video signal of 60 Hz. And, the video signal is time-sequentially derived from the first memory 85a, the second memory 85b and the third memory 85c to a recording/reproducing unit 86 making time lags between every 1/3 pseudo-field signal (1/180 sec.) as shown in FIG.12. FIG.12 diagrammatically illustrates a recording operation of the third embodiment. The video signal of each pseudo-field signal is recorded to the tape 4 by the recording/reproducing unit 86 as follows:

FIG.12 shows a diagram of the recording operation of the divided and extended HDTV signal, that is a pseudo-field signal in the third embodiment. The recording operation of the third embodiment is substantially the same operation as the recording operation of the aforementioned second embodiment shown in FIG.10.

The tape guide drum 9 of the third embodiment is rotated at 3/2 times field scanning frequency of the standard TV signal. In case of National Television System Committee (NTSC), the tape guide drum 9 is rotated at 90 Hz of frequency. Therefore, the tape guide drum 9 is rotated 3/2 rotation in a period of time for outputting one pseudo-field signal from either the first memory 85a, the second memory 85b or the third memory 85c.

As mentioned above, the first memory 85a, the second memory 85b and the third memory 85c time-sequentially output video signals in respective pseudo-field signals which have time lags of 1/3 time period of a pseudo-field each other. The three time-sequential video signals have parallelly (simultaneously) existing parts. Therefore, it is necessary to record the video signals of three pseudo-field signals by the recording/reproducing unit 86 at the same time.

As shown in FIG.12, the first rotary head 21a records the first 1/3 part of the first pseudo-field signal PF1 which is derived from the first memory 85a is (shown with dotted portions) to the upper recording area 4a, the fourth rotary head 22b records the next 1/3 part of the first pseudo-field signal PF1 to a middle recording area 4b, and the fifth rotary head 23a records the final 1/3 part of the first pseudo-field signal PF1 to the lower recording are 4c in order.

In the recording operation for the second pseudo-field signal PF2 derived from the second memory 85b is shown by rightward rising hatching in considered. When the first rotary head 21a finishes to record the first 1/3 part of the first pseudo-field signal PF1 to the upper recording area 4a, the second rotary head 21b, which has not been used in the first pseudo-field signal PF1 recording operation, starts to record the first 1/3 part of the second pseudo-field signal PF2 to the upper recording area 4a as shown in FIG.12. In other words, when the fourth rotary head 22b is recording the next 1/3 part of the first pseudo-field signal PF1 to the middle recording area 4b, the second rotary head 21b is recording the first 1/3 part of the second pseudo-field signal PF2 to the upper recording area 4a.

In the recording operation for the third pseudo-field signal PF3, that is a block shown with lines rightward falling hatched, when the fifth rotary head 23a is recording the final 1/3 part of the first pseudo-field signal PF1 in the lower recording area 4c, the first rotary head 21a is recording the first 1/3 part of the third pseudo-field signal PF3 in the upper recording area 4a. Thereafter, as shown in FIG.12, six rotary heads 21a, 21b, 22a, 22b, 23a and 23b record the video signals in three recording areas 4a, 4b and 4c by selecting these rotary heads 21a, 21b, 22a, 22b, 23a and 23b in response to the video signals. Consequently, the video signals of three fields, which are derived from the first memory 85a, the second memory 85b and the third memory 85c, can be recorded onto the tape 4 at the same time.

In the recording/reproducing apparatus of the third embodiment, the first 1/3 part of each pseudo-field signal is recorded in the upper recording area 4a, the next 1/3 part of each pseudo-field signal is recorded in the middle recording area 4b, and the final 1/3 part of each pseudo-field signal is recorded in the lower recording area 4c. The recording patterns, which are recorded by the above-mentioned recording operation of the third embodiment, are formed on the tape 4 to have the same patterns as the aforementioned recording patterns shown in FIG.5 of the first embodiment, except the inclination in the recording patterns. The recording patterns of the third embodiment are different in the only inclination from the first embodiment. The difference is caused by the different traveling speed of the tape 4. Accordingly, the azimuth of each rotary head 21a, 21b, 22a, 22b, 23a or 23b and the arrangements of the recording tracks 24 in the third embodiment is designed to have the same characteristics as the first embodiment and the second embodiment, in order to decrease a crosstalk caused by interference between adjacent tracks.

In case of reproducing the video signal of the HDTV signal which has been recorded by the above-mentioned recording operation of the third embodiment, the recording tracks, where the pseudo-field signals are recorded on the tape 4, are scanned by the rotary heads of the same disposition operated by the same manner as the recording operation. And, three pseudo-field signals, which are derived from the rotary heads, are combined into one field of the HDTV signal by the recording/reproducing apparatus of the third embodiment. Thus, the recorded HDTV signal is reproduced (played) by the recording/reproducing apparatus of the third embodiment.

According to the recording/reproducing apparatus of the third embodiment, the video signal of one pseudo-field signal is recorded by the combination of three rotary heads 21a, 22b and 23a of the tape guide drum 9 or the combination of the three rotary heads 21b, 22a and 23b. Since the combination of the three rotary heads 21a, 22b and 23a or the other combination of the three rotary heads 21b, 22a and 23b divides the video signal of one field into three recording tracks 24, 24 and 24, one length of the recording track 24 can be selected at 1/3 length of the conventional recording track on which one field is continuously recorded. And, the diameter of the tape guide drum 9 can be selected at 1/3 of the diameter of the conventional tape guide drum which has plural heads disposed on a single plane on the tape guide drum. And further, the tape path for recording or reproducing can be easily arranged by using the small tape guide drum 9. As a result, the recording/reproducing apparatus of the third embodiment according to the present invention can be configured in a small-sized tape cassette. And, the recording/reproducing apparatus of the third embodiment can record and reproduce high definition television (HDTV) signal having several times picture information of the standard TV signal.

Apart from the aforementioned first, second and third embodiments wherein a series of the video signal to be recorded is divided with regard to time, a modified embodiment may be such that a recording/reproducing apparatus is designed to divide a picture by jumping across predetermined numbers of scanning lines, or to divide a picture into plural areas of the picture.

However, the above-mentioned modified embodiments must be constructed to have a complicated circuit for operating video signals, and must provide further a memory device and/or a delay device. And, it is necessary to provide a circuit unit for re-convert the video signal in the playing reproducing with the modified recording/reproducing apparatus. And further, in the further modified embodiment wherein the recording/reproducing apparatus is designed to be recorded or reproduced by using digital signals, it is possible to apply other known system for dividing a picture to this recording/reproducing apparatus of the present invention.

### [ Fourth embodiment ]

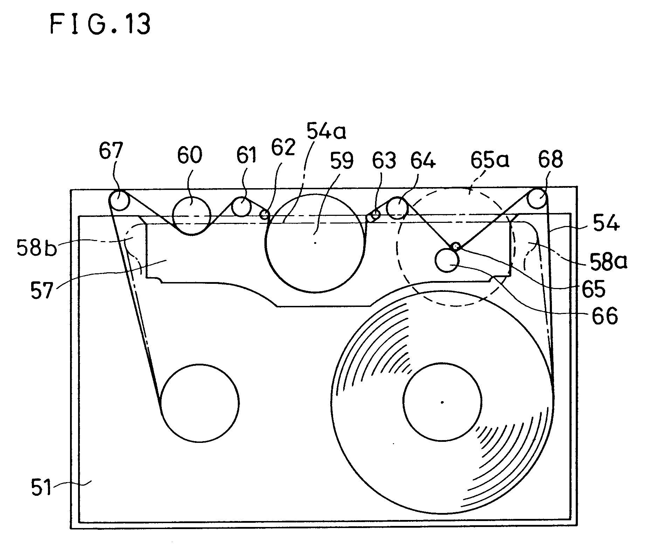

Hereafter, a fourth embodiment of a recording/reproducing apparatus in accordance with the present invention is described referring to the accompanying drawing of FIG.13.

FIG.13 shows a plan view showing main parts for tape loading mechanism of the recording/reproducing apparatus of the fourth embodiment. Corresponding parts and components to the first embodiment are shown by the same numerals and marks, and the description thereon made in the first embodiment similarly apply. Differences and features of this fourth embodiment from the first embodiment are as follows.

In FIG.13, a tape 54a in a tape cassette 51 is stretched between a pair of stationary cassette posts 58a and 58b which are in front of the tape cassette 51 in a first step of a tape loading operation as shown by the alternate long and short dash line. An opening 57 is formed at the front side of the tape cassette 51. The tape guide drum 59 is constructed so as to have rotary heads as the same mechanism and the same recording operation as the aforementioned first embodiment.

The recording/reproducing apparatus of the fourth embodiment provides various loading posts 60, 61, 62, 63 and 64, a capstan 65 and a pinch roller 66 for forming a tape path. In the recording/reproducing apparatus of the fourth embodiment, since the stationary cassette posts 58a and 58b are fixed to the tape cassette 51, the recording/reproducing apparatus is provided with two loading posts 67 and 68 so in order to prevent the tape 54 from contacting with the stationary cassette posts 58a and 58b during recording or reproducing. And, the recording/reproducing apparatus of the fourth embodiment is constructed such that relation of the capstan 65 and the pinch roller 66 are arranged in opposite sides with respect to the tape 54 in comparison with the aforementioned first embodiment.

When the tape cassette 51 is just loaded in the recording/reproducing apparatus, the various loading posts 61, 62, 63, 64, 67 and 68 for forming a tape path and the pinch roller 66 are inserted into the opening 57 of the tape cassette 51. The tape guide drum 59, the loading post 60 and the capstan 65 are arranged outside of the opening 57 facing against the stretched tape 54a. A capstan motor 65a, which is configured integral with the capstan 65, is provided under a frame (not shown).

The tape path for the recording or the reproducing is established in the recording/reproducing apparatus of the fourth embodiment by a sliding operation of the tape guide drum 59, the loading posts 60, 61, 62, 63, 64, 67 and 68 and the capstan 65 which are moved toward a predetermined positions to close to the tape 54. When the tape path is established in the recording/reproducing apparatus, the tape 54 is wound at a wrap angle of about 190° around the tape guide drum 59, and the wound tape 54 is slanted at a predetermined inclination for recording or reproducing. Since the driving mechanism for sliding the tape guide drum 59, the loading posts 60, 61, 62, 63, 64, 67 and 68 and the pinch roller 66 can be constructed with a conventional sliding lever assembly (not shown), which has been known and widely used, an explanation for the driving mechanism is omitted from the following description.

As shown in FIG.13, the whole necessary driving mechanism for the forming tape path, that is the tape guide drum 59, the loading posts 60, 61, 62, 63 and 64, the capstan 65, the capstan motor 65a and the pinch roller 66 can be received in a small space. This space is defined by the positions of the slid loading posts 67 and 68, as nearly the same size as a casing of a tape cassette, and is a possible minimum space for functioning the mechanism.

In the recording/reproducing apparatus of this fourth embodiment, the diameter of the tape guide drum 59 can be selected to be some larger diameter, such as about 20 mm, than the tape guide drum 9 (13.3 mm) of the first embodiment. In other words, since the length of the recording track on the tape 54 can be selected to be longer than the first embodiment by selecting the larger diameter, the recording/reproducing apparatus of the fourth embodiment improves further characteristics in the recording operation and the reproducing operation.

And, since there is some room in front of the tape cassette 51 in the fourth embodiment, the capstan 65 and the capstan motor 65a can be disposed at the outside of the stretched tape 54a before the forming tape path. Therefore, the tape guide drum 59 and the capstan 65 are disposed in the same side (outside) against the stretched tape 54a. As a result, the tape guide drum 59, the loading post 60, the capstan 65 and the capstan motor 65a can be fixed to a stationary support frame (not shown). And, other loading posts 61, 62, 63, 64, 67 and 68 and the pinch roller 66, which are disposed at the inside against the tape 54, are constructed to close to the tape 54 when the tape path is established by these tape loading mechanism. Therefore, the tape guide drum 59 and the capstan 65, which are required to be accurately disposed, can accurately be arranged on the same stationary support frame. As a result, the reliability of the tape loading mechanism of the fourth embodiment is further improved in comparison with the first embodiment.

According to the recording/reproducing apparatus of the present invention, n×m pieces of the rotary heads are disposed in n planes each having m pieces on a circumference of the tape guide drum, and the selected rotary head records a series of the video signals by dividing into n sections. As a result, a physical format of the recording track for recording a series of the video signals can be freely set by the arrangement of the plural rotary heads. And, the tape guide drum, which is a key member to determine size and weight of a tape loading mechanism, can be configured to have a minimum diameter. As a result, the recording/reproducing apparatus of the present invention can be configured to be formed in a small-sized as the same size as a tape cassette or a casing of a tape cassette.

And, in the recording/reproducing apparatus of the present invention, number of rotation of the tape guide drum is selected at n/2 times of the field frequency, and a scanning frequency of the image pickup device is selected at n times of field frequency of the standard TV signal. And, the video signal of a field, which is derived from the image pickup device, is time-sequentially extended n times in the recording/reproducing apparatus of the present invention, and the extended video signal of the field is recorded by n×m pieces of the rotary heads at the same time. As a result of the above-mentioned configuration, the recording/reproducing apparatus of the present invention can reproduce a clear slow-motion picture by increasing picture information of the video signals without a high revolution speed of the tape guide drum and a complicated mechanism, even though the recording/reproducing apparatus is configured to be formed in a small sized.

And further, the recording/reproducing apparatus of the present invention provides the rotary heads in n planes which are arranged to be at right angles to a rotation axis of the tape guide drum. Since the rotary heads of the recording/reproducing apparatus can record the high definition television (HDTV) signals by dividing into n sections, a physical format of the recording track for recording the high definition television (HDTV) signals can be freely set by the arrangement of the plural rotary heads. And, the tape guide drum, which is a key member to determine size and weight of a tape loading mechanism, can be configured to have a minimum diameter. The recording/reproducing apparatus of the present invention can record plural fields at the same time by dividing and extending each field without increasing number of the rotary heads on one plane at right angles to the rotation axis of the tape guide drum, and increasing wrap angle of the tape around the tape guide drum. Consequently, the recording/reproducing apparatus, which is configured to be formed in a small-sized and a light-weighted, can record and reproduce the high definition television (HDTV) signals having an increased picture information without high rotation speed of the tape guide drum.

Although the present invention has been described in terms of the presently preferred embodiments, it is to be understood that such disclosure is not to be interpreted as limiting. Various alterations and modifications will no doubt become apparent to those skilled in the art after having read the above disclosure. Accordingly, it is intended that the appended claims be interpreted as covering all alterations and modifications as fall within the true spirit and scope of the invention.

## Claims

1. A recording/reproducing apparatus comprising:
a tape guide drum (9) for forming a tape path for recording or reproducing signals and
m pieces of rotary heads (21a/21b, 22a/22b or 23a/23b) disposed in n planes which are parallel with each other and has right angles to a rotation axis of said tape guide drum (9),
n pieces of said rotary head (21a/22b/23a or 21b/22a/23b) each selected from said m pieces of rotary heads (21a/22b, 22a/22b or 23a/23b) in each plane writing in a manner to divide one continuous signal into n sections by said n pieces of rotary heads (21a/22b/23a or 21b/22a/23b) selected from each plane. [FIG.1 to 12]

2. A recording/reproducing apparatus in accordance with claim 1, wherein
said one continuous signal is standard television signal of one field. [FIG.1 to 12]

3. A recording/reproducing apparatus in accordance with claim 1 or 2, wherein
said n sections of said continuous signal is recorded by said n pieces of rotary heads (21a/22b/23a or 21b/22a/23b) on n sections on a tape (4). [FIG.1 to 12]

4. A recording/reproducing apparatus in accordance with one of the claims 1 to 3, wherein
plural recording tracks, which are recorded by
plural recording tracks, which are recorded by said n pieces of rotary heads (21a/22b/23a or 21b/22a/23b) constitutes a sequential recording track (24) for recording said one continuous signal. [FIG.1 to 12]

5. A recording/reproducing apparatus in accordance with one of the claims 1 to 4, wherein
respective n pieces (21a/22a/23a or 21b/22b/23b) of said rotary heads on said planes are disposed on lines which are parallel with the axis of said tape guide drum (9). [FIG.1 to 12]

6. A recording/reproducing apparatus in accordance with one of the claims 1 to 5, wherein
all the n×m pieces of said rotary heads (21a, 21b, 22a, 22b, 23a and 23b) are constructed to have different azimuths in adjacent tracks (24). [FIG.1 to 12]

7. A recording/reproducing apparatus in accordance with one of the claims 1 to 6, wherein
all the n×m pieces of said rotary heads (21a, 21b, 22a, 22b, 23a and 23b) are configured to have same azimuths for said one continuous signal. [FIG.1 to 12]

8. A recording/reproducing apparatus in accordance with one of the claims 1 to 7, wherein
signal to be recorded is constructed by digital signal. [FIG.1 to 12]

9. A recording/reproducing apparatus in accordance with at least claim 2, wherein
a rotation frequency of said tape guide drum (9) is selected at n/2 times of field scanning frequency of standard television signal. [FIG.1 to 12]

10. A recording/reproducing apparatus in accordance with at least claim 1 or 9, wherein
said number n is an odd number which is no smaller than 3. [FIG.1 to 12]

11. A recording/reproducing apparatus in accordance with at least claim 1 or 9, wherein
said number m is an even-number which is no smaller than 2. [FIG.1 to 12]

12. A recording/reproducing apparatus in accordance with at least claim 1 or 9, further comprising:
an image pickup device (32) having scanning frequency which is set at n times of that of the standard television signal,
memory units (36a, 36b and 36c) which extend each data of video signal of field derived from said image pickup device (32) n times with respect to time axis, and which divide them into n sections, and
a recording/reproducing unit (37) which records said extended and divided video signal of the field by n×m pieces of said rotary heads (21a, 21b, 22a, 22b, 23a and 23b). [FIGs.9 and 10]

13. A recording/reproducing apparatus in accordance with claim 12, wherein
said divided and extended video signals of fields to be recorded by n×m pieces of said rotary heads (21a, 21b, 22a, 22b, 23a and 23b) have time lags of 1/n field scanning time period with each other. [FIGs.9 and 10]

14. A recording/reproducing apparatus comprising:
a signal processing unit (82, 84, 85a, 85b and 85c) which divides field of high definition television signals into n sections and extends n times with respect to time axis the divided video signals of field to produce a pseudo-field signal,
a tape guide drum (9) for forming a tape path for recording or reproducing said high definition television signal,
m pieces of rotary heads (21a/21b, 22a/22b or 23a/23b) disposed in n planes which are parallel with each other and has right angles to a rotation axis of said tape guide drum (9), and
a control circuit unit (83) which controls to divide said pseudo-field signal into n sections, and which selects n pieces of rotary heads from said m pieces of rotary heads (21a/21b, 22a/22b or 23a/23b) in each plane, and which controls to record said n sections of pseudo-field signals on a tape (4) by said n pieces of said rotary heads (21a/22a/23a or 21b/22b/23b). [FIGs.11 and 12]
